# EUROPÄISCHE PATENTSCHRIFT

(11) **EP 3 385 123 B1**
(45) Veröffentlichungstag und Bekanntmachung des Hinweises auf die Patenterteilung: **15.07.2020**
(21) Anmeldenummer: 18166033.3
(22) Anmeldetag: 06.04.2018
(51) Int. Cl.: B60R 3/02

(54) **FAHRZEUGTREPPE ODER MASCHINENTREPPE**
VEHICLE STAIRCASE OR MACHINE STAIRCASE
ESCALIER DE VÉHICULE OU ESCALIER DE MACHINE

(30) Priorität: 06.04.2017 DE 102017107444
(43) Veröffentlichungstag der Anmeldung: 10.10.2018
(73) Patentinhaber: Griener, Daniel, 88630 Pfullendorf (DE)
(72) Erfinder: Griener, Daniel, 88630 Pfullendorf (DE)
(74) Vertreter: Otten, Roth, Dobler & Partner mbB Patentanwälte

(56) Entgegenhaltungen:
- DE-A1-102017 106 369
- US-A- 3 033 309
- US-A- 4 145 066
- US-A- 4 982 974
- US-A- 5 697 626

## Beschreibung

Die Erfindung betrifft eine Fahrzeugtreppe oder Maschinentreppe nach dem Oberbegriff des Anspruchs 1.

Fahrzeugtreppen oder Maschinentreppen sind aus dem Stand der Technik hinlänglich bekannt.

So kennt man beispielsweise aus der US 4 145 066 A eine Notausstiegstreppe für Schulbusse. Aus der US 5 697 626 A kennt man bereits eine Trittbrettverlängerung für ein Fahrzeug. Aus der US 3 033 309 A ist eine verlängerbare Trittleiter für Fahrzeuge bekannt. Die US 4 982 974 A offenbart eine einstellbare Fahrzeugtreppe.

Beim Besteigen solcher Treppen, beispielsweise um in Führerhäuser von Fahrzeugen, wie Landmaschinen (z.B. Traktoren oder dergleichen) zu gelangen, muss bei einem ersten Tritt ausgehend vom Boden in der Regel ein Höhenunterschied von etwa 50 cm vom Boden bis zur ersten Sprosse bzw. Trittelement aufgrund der notwendigen Bodenfreiheit des Fahrzeugs überwunden werden. Dies ist nicht nur erschwerlich, sondern stellt auch eine nicht unerhebliche Belastung für den Körper, insbesondere für den Rücken, dar.

In gleicher Weise kann ein Absteigen von einer Treppe eines Fahrzeugs, beispielsweise einer Landmaschine, einen stark körperbelastenden Vorgang darstellen. Beim Absteigen einer Fahrzeugtreppe, z.B. beim Verlassen eines Fahrzeugs, besteht insbesondere die Problematik, dass ein Fahrzeug-Benutzer, der in Vorwärtsrichtung, d.h. mit dem Rücken zur Treppe absteigt, erhöhten körperlichen Belastungen ausgesetzt ist, weil der Höhenunterschied zwischen der untersten Stufe bzw. des untersten Trittelements der Treppe und dem Boden oftmals durch einen Sprung von der untersten Stufe überwunden wird. Damit kann auch eine erhebliche Verletzungsgefahr einhergehen. Aufgabe der vorliegenden Erfindung ist es somit, eine Fahrzeugtreppe bereitzustellen, welche eine besonders körperschonende Handhabung erlaubt.

In Analogie kann die Erfindung auch auf Maschinentreppen, z.B. bei Produktionsanlagen oder Anhängern angewendet werden. Ein Fahrzeug kann im Sinne der Erfindung auch als Maschine aufgefasst werden.

Zur Lösung der Aufgabe wird eine Fahrzeugtreppe vorgeschlagen, umfassend einen Träger sowie Trittelemente, wobei bei Einwirken einer Gewichtskraft auf ein Trittelement ein Abstand mindestens eines Trittelements zu einem Untergrund verringerbar ist.

Es ist vorgesehen, dass der Träger zur Einstellung einer Geschwindigkeit der Bewegung des mindestens einen Trittelements zumindest eine Baugruppe umfasst, welche Baugruppe wenigstens ein dynamisches Bremsmittel umfasst.

Durch Bereitstellen eines Bremsmittels kann während der Verringerung des Abstands zwischen Untergrund und Trittelement ein Abbremsen ermöglicht werden, so dass eine derartige Abstandsverringerung nicht ruckartig erfolgt. Vielmehr kann ein Gleiten des Benutzers beim Absteigen der Fahrzeugtreppe bereitgestellt werden. Dies ist für einen Benutzer besonders körperschonend. Zudem wird eine besonders komfortable Nutzung der Fahrzeugtreppe ermöglicht. Bei Einwirken einer Gewichtskraft durch einen Benutzer auf ein Trittelement wird durch das Abbremsen zusätzlich auch eine Sicherheitsfunktion für den Benutzer bereitgestellt, weil die Dynamik des Auftretens verringert wird.

Erfindungsgemäß ist vorgesehen, dass das dynamische Bremsmittel als Wirbelstrombremse ausgebildet ist. Wirbelstrombremsen weisen durch berührungsloses Arbeiten geringen Verschleiß auf und sind sehr zuverlässig. Weiterhin können individuelle Bedürfnisse bzw. Gegebenheiten des Benutzers wie Gewicht und Bremsdynamik berücksichtigt werden.

Die Erfindung kann in einer vorteilhaften Weiterbildung vorsehen, dass die Fahrzeugtreppe zumindest ein mit dem Träger und der Baugruppe verbundenes Rückstellelement umfasst.
Ein Rückstellelement ist im Lichte der Erfindung so aufzufassen, dass der Abstand zwischen einem Untergrund und einem Trittelement, welcher zuvor durch Einwirken einer Gewichtskraft auf ein Trittelement verringert wurde, mittels Rückstellelement so vergrößert, dass vorzugsweise ein ursprünglicher Abstand zwischen dem Untergrund und dem Trittelement vorliegt. Eine derartig ausgebildete Fahrzeugtreppe ermöglicht eine komfortable Bedienung. Weiterhin kann ein Rückstellelement Beschädigungen der Fahrzeugtreppe im Betrieb des Fahrzeugs entgegengewirkt werden.

Ein derartiger ursprünglicher Abstand kann im Sinne der Erfindung als Ruhestellung aufgefasst werden. Dementsprechend kann das Rückstellelement vorgesehen sein, um die Fahrzeugtreppe nach einem Gebrauch, d.h. nach einem Abstieg wieder in diese Ruhestellung zu bewegen.

Die Erfindung kann in einer weiteren vorteilhaften Ausgestaltung vorsehen, dass das dynamische Bremsmittel in seiner Bremswirkung manuell oder automatisch einstellbar, insbesondere in seiner Bremskraft manuell oder automatisch justierbar ist. In vorteilhafter Weise können somit individuelle Bedürfnisse des Benutzers der Fahrzeugtreppe berücksichtigt werden, z.B. das Nutzergewicht.

In einer vorteilhaften Ausgestaltung der Erfindung kann vorgesehen sein, dass zur Verringerung des Abstands zumindest ein Betätigungsmittel vorgesehen ist, welches zumindest als Verriegelungsmittel und/oder zumindest als Entriegelungsmittel ausgebildet ist und vorzugsweise als Trittelement ausgebildet ist. Eine unbeabsichtigte Abstandsverringerung zwischen Untergrund und Trittelement kann dadurch unterbunden werden. Auch kann eine gewünschte Abstandsstellung beim Erreichen verriegelt und erst später wieder freigegeben werden.

Ein weiteres Beispiel, das nicht zur Erfindung gehört, kann vorsehen, dass das dynamische Bremsmittel als pneumatisch wirkende Bremse oder als hydraulisch wirkende Bremse oder als mechanisch wirkende Bremse, insbesondere Reibbremse ausgebildet ist. Derartige Bremsmittel sind zuverlässig und leicht austauschbar und bieten kompakte Bauformen.

Ein weiteres Beispiel, das nicht zur Erfindung gehört, kann insbesondere vorsehen, dass das dynamische Bremsmittel als Ölbremse ausgebildet ist. Derartige Bremsen sind kostengünstig, wartungsarm und besonders zuverlässig.

In einer vorteilhaften Weiterbildung kann die Erfindung vorsehen, dass ein Führungsmittel vorgesehen ist, wobei zumindest ein Trittelement mittels des Führungsmittels an dem Träger höhenverschiebbar befestigbar ist.

Durch Betreten eines Trittelements, d.h. durch ein Einwirken einer Gewichtskraft auf ein Trittelement durch einen Benutzer wird der Abstand zwischen dem betretenen Trittelement und dem Untergrund entlang des Führungsmittels verringert. Ein solches höhenverschiebbares Trittelement ermöglicht somit, dass eine Benutzung, insbesondere ein Abstieg von der Fahrzeugtreppe besonders körperschonend erfolgen kann. Zudem kann ein höhenverschiebbares Trittelement auch einen vereinfachten Aufstieg in ein Fahrzeug ermöglichen.

Die Erfindung kann in einer Ausgestaltung vorsehen, dass die Baugruppe zumindest ein Führungsmittel umfasst, welches vorzugsweise eine Zahnstange oder eine Spindel oder einen Seilzug umfasst. Derartige Führungsmittel sind robust, zuverlässig verwendbar und kostengünstig. Überdies erlauben sie einfache Wartung, z.B. Schmierung, und insbesondere der Seilzug ermöglicht flexible Anordnungen einer kraftübertragenden Komponente im Raum der Baugruppe.

Die Erfindung kann in einer Weiterbildung auch vorsehen, dass die Baugruppe den Träger umfasst und/oder dass die Baugruppe wenigstens eine Rastklinke und ein damit verbindbares Rückstellmittel umfasst, wobei die Rastklinke vorzugsweise in ein Rastelement einrastbar und ausrastbar ist. Dies stellt kompakte Aufbauten dar, die kostengünstig realisierbar sind. Eine Baugruppe, die einen Träger umfasst, kann eine vereinfachte Montage der Fahrzeugtreppe an einem Fahrzeug ermöglichen. Mittels einer Baugruppe, die eine Rastklinke und ein damit verbindbares Rückstellmittel umfasst, wobei die Rastklinke vorzugsweise in ein Rastelement einrastbar und ausrastbar ist, kann eine Fahrzeugtreppe bereitgestellt werden, die erhöhten Sicherheitsanforderungen genügen kann und die ein vereinfachtes Aufsteigen in einer unteren Rastposition und ein vereinfachtes Absteigen in einer oberen Rastposition ermöglichen kann.

In einer weiteren vorteilhaften Ausgestaltung der Erfindung kann vorgesehen sein, dass die Baugruppe wenigstens ein Rastelement umfasst, welches Rastelement vorzugsweise wenigstens eine erste Rastposition und wenigstens eine zweite Rastposition umfasst. Derartige Rastpositionen können auch als obere bzw. untere Rastpositionen aufgefasst werden.
Mittels eines Rastelements kann ein vereinfachter Aufstieg auf die Fahrzeugtreppe ermöglicht werden. Weiterhin kann ein unbeabsichtigtes Betätigen der Fahrzeugtreppe, d.h. ein unbeabsichtigtes Verringern eines Abstands zwischen dem Untergrund und Trittelement unterbunden werden. Ein Rastelement kann somit zu einer erhöhten Sicherheit der Fahrzeugtreppe beitragen.

Eine besonders vorteilhafte Weiterbildung der Erfindung kann vorsehen, dass ein Abstand mindestens eines Trittelements zu einem Untergrund durch Vergrößerung eines Abstands zwischen zwei Trittelementen verringerbar ist. Auf diese Weise kann eine Fahrzeugtreppe bereitgestellt werden, die ein besonders körperschonendes Absteigen, z.B. von bzw. aus einem Fahrzeug ermöglicht. Des Weiteren wird die bewegte Masse der Treppe verringert, wodurch die Dimensionierung der Komponenten und damit die Herstellungskosten optimiert werden können.

In einer weiteren Ausgestaltung der Erfindung kann vorgesehen sein, dass das Führungsmittel vorzugsweise zwei Haltemittel umfasst, wobei ein Trittelement in einer ersten Stellung in einem ersten Haltemittel haltbar, insbesondere rastbar ist und nach einer Vergrößerung des Abstands benachbarter Trittelemente in einer zweiten Stellung in einem zweiten Haltemittel haltbar, insbesondere rastbar ist.

Somit kann ein Trittelement z.B. nach einem Absteigen in seiner Position, d.h. in verringertem Abstand zum Untergrund belassen werden. Dadurch kann ein vereinfachtes Aufsteigen auf die Fahrzeugtreppe bzw. in ein Fahrzeug ermöglicht werden.

Die Erfindung kann auch vorsehen, dass wenigstens ein vorzugsweise als Zusatztritt ausgebildetes weiteres Trittelement bei einer Vergrößerung des Abstands mitbewegbar ist.

Ein solcher mitbewegbarer Zusatztritt kann vor allem einen vereinfachten Aufstieg in ein Fahrzeug ermöglichen, d.h. bei einer Vergrößerung des Abstands zwischen Untergrund und Trittelement als Zwischenstufe bzw. Zwischentritt wirken.

Die Erfindung kann auch vorsehen, dass die Baugruppe an einer Rückseite des Trägers angeordnet ist oder dass die Baugruppe an einer Vorderseite des Trägers vorzugsweise zentriert durch Unterbrechung einer Fläche wenigstens eines Trittelements angeordnet ist. Somit kann auf einfache konstruktive Weise eine besonders körperschonende Fahrzeugtreppe bereitgestellt werden, die bei verschiedenen unterschiedlichen Fahrzeugtypen bzw. Ausgestaltungen von Fahrzeugen individuell einsetzbar ist. Ein entsprechendes Anwendungsspektrum der Fahrzeugtreppe kann somit entsprechend erhöht werden und Nachrüstungen in Bauräume bestehender Fahrzeuge werden erleichtert.

In einer vorteilhaften Weiterbildung der Erfindung kann vorgesehen sein, dass wenigstens ein Trittelement mittels der Baugruppe mit dem Träger verbindbar ist. Somit wird eine besonders kompakte und insbesondere sehr stabile Fahrzeugtreppe bereitgestellt. Durch Zwischenschaltung der Baugruppe zwischen Träger und wenigstens einem Trittelement ist die Erfindung in nahezu jeder Treppe einsetzbar, insbesondere nachrüstbar.

Im Sinne der Erfindung kann der Begriff Untergrund auch als Boden aufgefasst werden.

Ein dynamisches Bremsmittel kann im Sinne der Erfindung so aufgefasst werden, dass eine Wirkung des Bremsmittels, d.h. eine Bremswirkung, bei Einwirken von Kräften erfolgt, wobei die Bremswirkung proportional zur Bewegungsgeschwindigkeit ist.

Weitere Vorteile und Merkmale der Erfindung ergeben sich aus den Ansprüchen sowie aus der nachfolgenden Beschreibung von bevorzugten Ausführungsbeispielen der Erfindung, die anhand der Zeichnungen dargestellt sind. Es zeigt:
- Fig. 1:: eine Frontansicht einer erfindungsgemäßen Fahrzeugtreppe oder Maschinentreppe in schematischer Darstellung;
- Fig. 2:: die in Fig. 1 dargestellte Fahrzeugtreppe in einer Rückansicht;
- Fig. 3:: einen Ausschnitt einer weiteren Ausführung der erfindungsgemäßen Fahrzeugtreppe in einer Frontansicht;
- Fig. 4:: eine schematische Darstellung einer weiteren Ausführungsform einer Fahrzeugtreppe;
- Fig. 5:: eine schematische Darstellung einer weiteren Ausführungsform einer Fahrzeugtreppe.

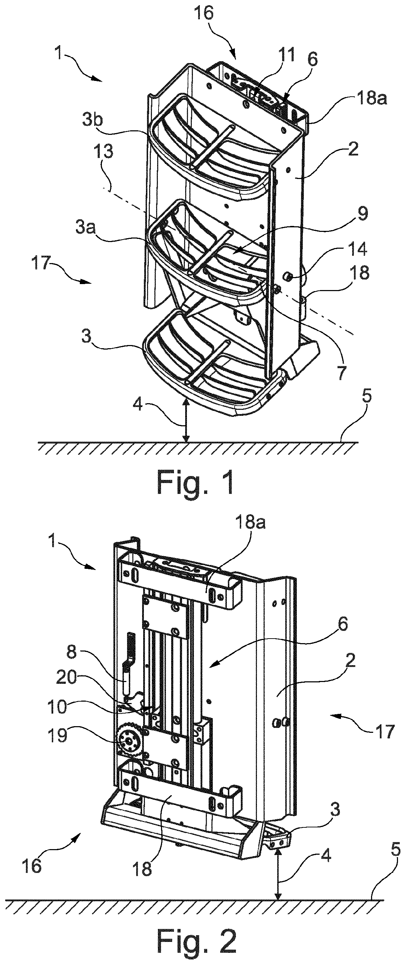

Eine erfindungsgemäße Fahrzeugtreppe 1 oder Maschinentreppe ist in schematischer Darstellung in Figur 1 gezeigt. Die in Figur 1 gezeigte Fahrzeugtreppe 1 befindet sich in einer Ruhestellung.

Die Fahrzeugtreppe 1 umfasst einen Träger 2 sowie Trittelemente 3, 3a, 3b. Vorliegend sind Trittelemente 3a, 3b innerhalb des Trägers 2 angeordnet. In vorliegender Ausführung ist ein Trittelement 3 außerhalb des Trägers 2 angeordnet. Das Trittelement 3 kann als unterstes Trittelement aufgefasst werden und ist über eine Baugruppe 6 (siehe auch Figur 2) mit dem Träger 2 verbunden. Auf diese Weise kann das Trittelement 3 bei Einwirken einer Gewichtskraft in Richtung eines Untergrunds 5 bewegt werden. Somit ist bei Einwirken einer Gewichtskraft auf das Trittelement 3 ein Abstand 4 zwischen dem Trittelement 3 und dem Untergrund 5 verringerbar. Bei der Bewegung zur Verringerung des Abstands wirkt das dynamische Bremsmittel 7 bremsend, wodurch ein besonders körperschonender Ausstieg von einem Fahrzeug ermöglicht wird.

Der Träger 2 umfasst Befestigungsmittel 18, 18a, mittels denen die Fahrzeugtreppe 1 in hier nicht näher dargestellter Art und Weise mit einem Fahrzeug, beispielsweise einer Landmaschine, etc. verbindbar ist.

Es ist in der Figur 1 dargestellt, dass der Träger 2 zur Einstellung einer Geschwindigkeit der Bewegung eines Trittelements 3 eine Baugruppe 6 umfasst, die ein dynamisches Bremsmittel 7 umfasst. Dadurch wird ein besonders körperschonendes Absteigen von der Fahrzeugtreppe 1 bzw. von einem Fahrzeug ermöglicht. Im Ausführungsbeispiel ist das dynamische Bremsmittel als Wirbelstrombremse ausgebildet.

Ferner ist ersichtlich, dass die Fahrzeugtreppe 1 ein mit dem Träger 2 und der Baugruppe 6 verbundenes Rückstellelement 11 umfasst. Vorliegend ist das Rückstellelement 11 als Gasdruckfeder ausgebildet.

Bei Verlassen eines Fahrzeugs über die Fahrzeugtreppe 1 erfolgt durch Betreten des Trittelements 3 eine Einwirkung einer Gewichtskraft auf dieses Trittelement 3. Infolge der oben beschriebenen Freigabe bzw. Entriegelung ist das Trittelement 3 derart höhenverschiebbar, dass ein Abstand 4 zu einem Untergrund verringerbar ist.

Bei einem Einstieg in ein Fahrzeug ausgehend von einer Ruhestellung der Fahrzeugtreppe 1 wird bei Betreten eines Trittelementes 3a, welches als Betätigungsmittel 9 ausgestaltet ist, ein weiteres Trittelement 3, das vorliegend ein unterstes Trittelement darstellt, entriegelt. Ein derartiges Entriegeln kann auch als freigeben aufgefasst werden. Ohne weitere Einwirkung einer Gewichtskraft bleibt das Trittelement 3 in dieser dargestellten Ruhestellung, d.h. ohne Änderungen des Abstands 4 zu einem Untergrund 5.

Das Trittelement 3a ist kippbar um eine Lagerachse 13 in dem Träger 2 angeordnet. Hierzu umfasst der Träger 2 ein Langloch 14, in welchem das Trittelement 3a z.B. mittels eines Bolzens haltbar bzw. bewegbar ist.

Das Trittelement 3a kann als Bedienelement der Rastklinke 20 wirken, die in ein Rastelement einrastbar bzw. ausrastbar ist.

Auf diese Weise kann die Fahrzeugtreppe z.B. mittels des Führungsmittels in zwei Rastpositionen bewegt werden, wobei diese als eine erste Rastposition und als eine zweite Rastposition aufgefasst werden können. Eine erste Rastposition liegt z.B. beim Absteigen der Treppe vor, eine zweite Position beim Aufsteigen der Treppe.

Die Verringerung des Abstands 4 zum Untergrund 5 kann auch als Abgleiten des Trittelements 3 aufgefasst werden. Dieses Gleiten wird durch kontinuierliche Bremswirkung des dynamischen Bremsmittels 7 ermöglicht. Somit kann ein Benutzer der Fahrzeugtreppe 1 bei Betreten des gleitenden Trittelements 3 besonders körperschonend aus bzw. von einem Fahrzeug aussteigen bzw. absteigen. Besonders vorteilhaft ist zudem, dass ein Abstieg von einem Fahrzeug in einer Vorwärtsbewegung erfolgen kann, wodurch der Abstieg auch besonders zügig erfolgen kann.

Im gezeigten Ausführungsbeispiel ist die Baugruppe 6 an einer Rückseite 16 des Trägers 2 angeordnet.
In der Figur 2 ist auch dargestellt, dass die Fahrzeugtreppe 1 ein Rückstellmittel 8 umfasst, welches vorliegend als Federmittel ausgebildet ist. Das Rückstellmittel 8 ist mit dem Träger 2 und der Baugruppe 6 verbunden. Im gezeigten Ausführungsbeispiel ist das Rückstellmittel 8 mit einer Rastklinke 20 verbunden.

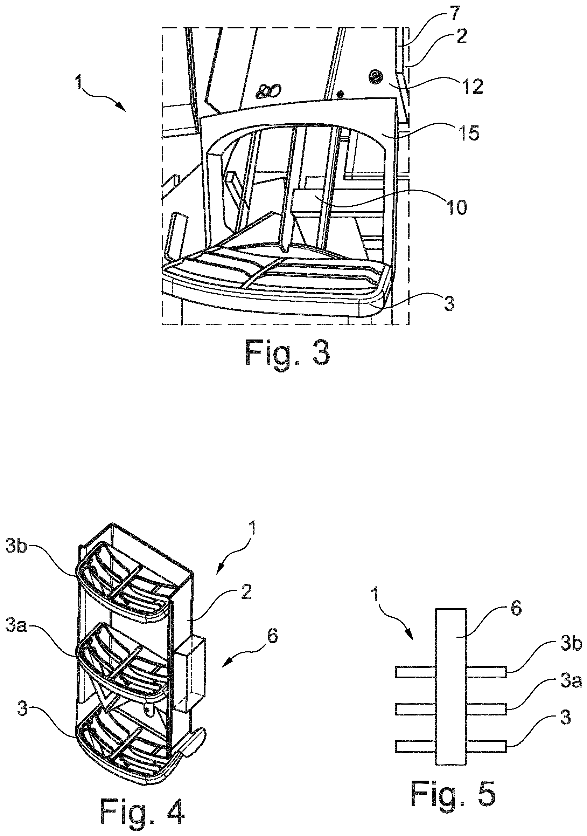

In der Figur 3 ist eine Ausführungsform einer erfindungsgemäßen Fahrzeugtreppe 1 gezeigt, die sich in einem ausgefahrenen Zustand befindet, der vorliegt, wenn ein Abstand eines Trittelements 3 zu einem Untergrund (siehe auch Figur 1) verringert wurde. Es ist aus Figur 3 ersichtlich, dass die Fahrzeugtreppe 1 einen Zwischentritt 15 umfasst. Der Zwischentritt 15 ist oberhalb des Trittelements 3 angeordnet.
Der Zwischentritt 15 ist unterhalb eines weiteren Trittelements (siehe z.B. Figur 1) angeordnet. Somit ist der Zwischentritt 15 zwischen zwei Trittelementen angeordnet und ermöglicht einen vereinfachten Aufstieg der Fahrzeugtreppe 1. Im Ausführungsbeispiel umfasst der Zwischentritt 15 eine Profilierung 12, die einen verbesserten Halt eines Benutzers beim Betreten des Zwischentritts 15 ermöglicht.

Im Ausführungsbeispiel ist der Zwischentritt 15 L-förmig ausgebildet und zwischen zwei Trittelementen angeordnet. Ein solcher Zwischentritt ist besonders einfach nachrüstbar.

In der Figur 5 ist dargestellt, dass die Baugruppe 6 seitlich an dem Träger 2 angeordnet ist. Dies ist insbesondere dann vorteilhaft, wenn ein Bauraum am Fahrzeug eine rückseitige Baugruppenanordnung nicht erlaubt. In der Figur 6 ist gezeigt, dass die Baugruppe 6 an einer Vorderseite 17 des Trägers 2 zentriert durch Unterbrechung einer Fläche Trittelementen 3, 3a, 3b angeordnet ist.

### Bezugszeichenliste:

- 1: Fahrzeugtreppe
- 2: Träger
- 3: Trittelement
- 3a: Trittelement
- 3b: Trittelement
- 4: Abstand
- 5: Untergrund
- 6: Baugruppe
- 7: Dynamisches Bremsmittel
- 8: Rückstellmittel
- 9: Betätigungsmittel
- 10: Führungsmittel
- 11: Rückstellelement
- 12: Profilierung
- 13: Lagerachse
- 14: Langloch
- 15: Zusatztritt
- 16: Rückseite
- 17: Vorderseite
- 18: Befestigungsmittel
- 18a: Befestigungsmittel
- 19: Zahnrad
- 20: Rastklinke

## Patentansprüche

1. Fahrzeugtreppe (1) oder Maschinentreppe, umfassend einen Träger (2) sowie Trittelemente (3, 3a, 3b), wobei bei Einwirken einer Gewichtskraft auf ein Trittelement (3, 3a, 3b) ein Abstand (4) mindestens eines Trittelements zu einem Untergrund (5) verringerbar ist,
wobei der Träger (2) zur Einstellung einer Geschwindigkeit der Bewegung des mindestens einen Trittelements (3, 3a, 3b) zumindest eine Baugruppe (6) umfasst, welche Baugruppe (6) wenigstens ein dynamisches Bremsmittel (7) umfasst,
**dadurch gekennzeichnet, dass**
das dynamische Bremsmittel (7) als Wirbelstrombremse ausgebildet ist.

2. Fahrzeugtreppe oder Maschinentreppe nach Anspruch 1, **dadurch gekennzeichnet, dass** die Fahrzeugtreppe (1) zumindest ein mit dem Träger (2) und der Baugruppe (6) verbundenes Rückstellelement (11) umfasst.

3. Fahrzeugtreppe oder Maschinentreppe nach einem der vorangehenden Ansprüche, **dadurch gekennzeichnet, dass** das dynamische Bremsmittel (7) in seiner Bremswirkung manuell oder automatisch einstellbar, insbesondere in seiner Bremskraft manuell oder automatisch justierbar ist.

4. Fahrzeugtreppe oder Maschinentreppe nach einem der vorangehenden Ansprüche, **dadurch gekennzeichnet, dass** zur Verringerung des Abstands (4) zumindest ein Betätigungsmittel (9) vorgesehen ist, welches zumindest als Verriegelungsmittel und/oder zumindest als Entriegelungsmittel ausgebildet ist und vorzugsweise als Trittelement (3, 3a, 3b) ausgebildet ist.

5. Fahrzeugtreppe oder Maschinentreppe nach einem der vorangehenden Ansprüche, **dadurch gekennzeichnet, dass** ein Führungsmittel (10) vorgesehen ist, wobei zumindest ein Trittelement (3, 3a, 3b) mittels des Führungsmittels (10) an dem Träger (2) höhenverschiebbar befestigbar ist.

6. Fahrzeugtreppe oder Maschinentreppe nach einem der vorangehenden Ansprüche, **dadurch gekennzeichnet, dass** die Baugruppe (6) zumindest ein Führungsmittel (10) umfasst, welches vorzugsweise eine Zahnstange oder eine Spindel oder einen Seilzug umfasst.

7. Fahrzeugtreppe oder Maschinentreppe nach einem der vorangehenden Ansprüche, **dadurch gekennzeichnet, dass** die Baugruppe (6) wenigstens ein Rastelement umfasst, welches Rastelement vorzugsweise wenigstens eine erste Rastposition und wenigstens eine zweite Rastposition umfasst.

8. Fahrzeugtreppe oder Maschinentreppe nach einem der vorangehenden Ansprüche, **dadurch gekennzeichnet, dass** die Baugruppe (6) den Träger (2) umfasst und/oder dass die Baugruppe (6) wenigstens eine Rastklinke (20) und ein damit verbindbares Rückstellmittel (8) umfasst, wobei die Rastklinke (20) vorzugsweise in ein Rastelement einrastbar und ausrastbar ist.

9. Fahrzeugtreppe oder Maschinentreppe nach einem der vorangehenden Ansprüche, **dadurch gekennzeichnet, dass** ein Abstand (4) mindestens eines Trittelements (3, 3a, 3b) zu einem Untergrund (5) durch Vergrößerung eines Abstands (10) zwischen zwei Trittelementen (3, 3a, 3b) verringerbar ist.

10. Fahrzeugtreppe oder Maschinentreppe nach Anspruch 7 **dadurch gekennzeichnet**, das Führungsmittel (10) vorzugsweise zwei Haltemittel umfasst, wobei ein Trittelement (3, 3a, 3b) in einer ersten Stellung in einem ersten Haltemittel haltbar, insbesondere rastbar ist und nach einer Vergrößerung des Abstands (4) benachbarter Trittelemente (3, 3a, 3b) in einer zweiten Stellung in einem zweiten Haltemittel haltbar, insbesondere rastbar ist.

11. Fahrzeugtreppe oder Maschinentreppe nach einem der vorangehenden Ansprüche, **dadurch gekennzeichnet, dass** wenigstens ein vorzugsweise als Zusatztritt (15) ausgebildetes weiteres Trittelement bei einer Vergrößerung des Abstands (4) mitbewegbar ist.

12. Fahrzeugtreppe oder Maschinentreppe nach einem der vorangehenden Ansprüche, **dadurch gekennzeichnet, dass** die Baugruppe (6) an einer Rückseite (16) des Trägers (2) angeordnet ist oder dass die Baugruppe (6) an einer Vorderseite (17) des Trägers (2) vorzugsweise zentriert durch Unterbrechung einer Fläche wenigstens eines Trittelements (3, 3a, 3b) angeordnet ist.

13. Fahrzeugtreppe oder Maschinentreppe nach einem der vorangehenden Ansprüche, **dadurch gekennzeichnet, dass** wenigstens ein Trittelement (3, 3a, 3b) mittels der Baugruppe (6) mit dem Träger (2) verbindbar ist.

## Claims

1. Vehicle staircase (1) or machine staircase, comprising a support (2) and also tread elements (3, 3a, 3b), wherein, upon the action of a weight force on a tread element (3, 3a, 3b), a distance (4) of at least one tread element from the ground (5) can be reduced,
wherein, to set a speed of the movement of the at least one tread element (3, 3a, 3b), the support (2) comprises at least one assembly (6), which assembly (6) comprises at least one dynamic braking means (7),
**characterized in that**
the dynamic braking means (7) takes the form of an eddy current brake.

2. Vehicle staircase or machine staircase according to Claim 1, **characterized in that** the vehicle staircase (1) comprises at least one resetting element (11) connected to the support (2) and the assembly (6).

3. Vehicle staircase or machine staircase according to either one of the preceding claims, **characterized in that** the dynamic braking means (7) can be set manually or automatically in its braking action, in particular can be adjusted manually or automatically in its braking force.

4. Vehicle staircase or machine staircase according to one of the preceding claims, **characterized in that**, to reduce the distance (4), there is provided at least one actuating means (9) which is designed at least as a locking means and/or at least as an unlocking means and is preferably designed as a tread element (3, 3a, 3b).

5. Vehicle staircase or machine staircase according to one of the preceding claims, **characterized in that** a guide means (10) is provided, wherein at least one tread element (3, 3a, 3b) can be height-displaceably fastened to the support (2) by means of the guide means (10).

6. Vehicle staircase or machine staircase according to one of the preceding claims, **characterized in that** the assembly (6) comprises at least one guide means (10), which preferably comprises a rack or a spindle or a cable pull.

7. Vehicle staircase or machine staircase according to one of the preceding claims, **characterized in that** the assembly (6) comprises at least one latching element, which latching element preferably comprises at least one first latching position and at least one second latching position.

8. Vehicle staircase or machine staircase according to one of the preceding claims, **characterized in that** the assembly (6) comprises the support (2), and/or **in that** the assembly (6) comprises at least one latching pawl (20) and a resetting means (8) which can be connected thereto, wherein the latching pawl (20) can preferably be latched into and unlatched from a latching element.

9. Vehicle staircase or machine staircase according to one of the preceding claims, **characterized in that** a distance (4) of at least one tread element (3, 3a, 3b) from the ground (5) can be reduced by increasing a distance (10) between two tread elements (3, 3a, 3b).

10. Vehicle staircase or machine staircase according to Claim 7, **characterized in that** the guide means (10) preferably comprises two holding means, wherein a tread element (3, 3a, 3b) can be held, in particular latched, in a first position in a first holding means and, after an increase in the distance (4) between adjacent tread elements (3, 3a, 3b), can be held, in particular latched, in a second position in a second holding means.

11. Vehicle staircase or machine staircase according to one of the preceding claims, **characterized in that** at least one further tread element, which is preferably designed as an auxiliary tread (15), can be concomitantly moved upon an increase in the distance (4).

12. Vehicle staircase or machine staircase according to one of the preceding claims, **characterized in that** the assembly (6) is arranged on a rear side (16) of the support (2), or **in that** the assembly (6) is arranged on a front side (17) of the support (2), preferably in a centred manner, by interrupting a surface of at least one tread element (3, 3a, 3b).

13. Vehicle staircase or machine staircase according to one of the preceding claims, **characterized in that** at least one tread element (3, 3a, 3b) can be connected to the support (2) by means of the assembly (6).

## Revendications

1. Escalier de véhicule (1) ou escalier de machine, comprenant un support (2) ainsi que des éléments de marche (3, 3a, 3b), dans lequel, lors de l'application d'une force pondérale sur un élément de marche (3, 3a, 3b), une distance (4) d'au moins un élément de marche par rapport à un sol (5) peut être réduite,
dans lequel le support (2) pour l'ajustement d'une vitesse du déplacement de l'au moins un élément de marche (3, 3a, 3b) comprend au moins un module (6), lequel module (6) comprend au moins un moyen de frein dynamique (7),
**caractérisé en ce que**
le moyen de frein dynamique (7) est réalisé sous forme de frein à courants de Foucault.

2. Escalier de véhicule ou escalier de machine selon la revendication 1, **caractérisé en ce que** l'escalier de véhicule (1) comprend au moins un élément de rappel (11) connecté au support (2) et au module (6) .

3. Escalier de véhicule ou escalier de machine selon l'une quelconque des revendications précédentes, **caractérisé en ce que** l'effet de freinage du moyen de frein dynamique (7) peut être réglé manuellement ou automatiquement, en particulier sa force de freinage peut être ajustée manuellement ou automatiquement.

4. Escalier de véhicule ou escalier de machine selon l'une quelconque des revendications précédentes, **caractérisé en ce que** pour réduire la distance (4), au moins un moyen d'actionnement (9) est prévu, lequel est réalisé au moins sous forme de moyen de verrouillage et/ou au moins sous forme de moyen de déverrouillage et est de préférence réalisé sous forme d'élément de marche (3, 3a, 3b).

5. Escalier de véhicule ou escalier de machine selon l'une quelconque des revendications précédentes, **caractérisé en ce qu'**un moyen de guidage (10) est prévu, au moins un élément de marche (3, 3a, 3b) pouvant être fixé de manière déplaçable en hauteur sur le support (2) au moyen du moyen de guidage (10).

6. Escalier de véhicule ou escalier de machine selon l'une quelconque des revendications précédentes, **caractérisé en ce que** le module (6) comprend au moins un moyen de guidage (10), lequel comprend de préférence une crémaillère ou une broche ou un câble Bowden.

7. Escalier de véhicule ou escalier de machine selon l'une quelconque des revendications précédentes, **caractérisé en ce que** le module (6) comprend au moins un élément d'encliquetage, lequel élément d'encliquetage comprend de préférence au moins une première position d'encliquetage et au moins une deuxième position d'encliquetage.

8. Escalier de véhicule ou escalier de machine selon l'une quelconque des revendications précédentes, **caractérisé en ce que** le module (6) comprend le support (2) et/ou **en ce que** le module (6) comprend au moins un cliquet d'encliquetage (20) et un moyen de rappel (8) pouvant être connecté à celui-ci, le cliquet d'encliquetage (20) pouvant de préférence être encliqueté et désencliqueté dans un élément d'encliquetage.

9. Escalier de véhicule ou escalier de machine selon l'une quelconque des revendications précédentes, **caractérisé en ce qu'**une distance (4) d'au moins un élément de marche (3, 3a, 3b) à un sol (5) peut être réduite en augmentant une distance (10) entre deux éléments de marche (3, 3a, 3b).

10. Escalier de véhicule ou escalier de machine selon la revendication 7, **caractérisé en ce que** le moyen de guidage (10) comprend de préférence deux moyens de retenue, un élément de marche (3, 3a, 3b) pouvant être retenu dans une première position dans un premier moyen de retenue, en particulier par encliquetage, et après augmentation de la distance (4) des éléments de marche adjacents (3, 3a, 3b), pouvant être retenu dans une deuxième position dans un deuxième moyen de retenue, en particulier par encliquetage.

11. Escalier de véhicule ou escalier de machine selon l'une quelconque des revendications précédentes, **caractérisé en ce qu'**au moins un élément de marche supplémentaire réalisé de préférence sous forme de marche additionnelle (15) peut être déplacé conjointement dans le cas d'une augmentation de la distance (4).

12. Escalier de véhicule ou escalier de machine selon l'une quelconque des revendications précédentes, **caractérisé en ce que** le module (6) est disposé au niveau d'un côté arrière (16) du support (2) ou **en ce que** le module (6) est disposé au niveau d'un côté avant (17) du support (2) de préférence de manière centrée par interruption d'une surface d'au moins un élément de marche (3, 3a, 3b).

13. Escalier de véhicule ou escalier de machine selon l'une quelconque des revendications précédentes, **caractérisé en ce qu'**au moins un élément de marche (3, 3a, 3b) peut être connecté au support (2) au moyen du module (6).
